# EUROPEAN PATENT APPLICATION

(11) **EP 4 145 414 A1**
(43) Date of publication of application: **08.03.2023**
(21) Application number: 21275124.2
(22) Date of filing: 06.09.2021
(51) Int. Cl.: G07F 7/06, G06Q 20/06

(54) **APPARATUS FOR RECORDING A TRANSACTION ON A BLOCKCHAIN**

(71) Applicant: Circularr Ltd, London Greater London NW6 6RA (GB)
(72) Inventor: Vogel, Eric, London (GB); Johnson, Zak, London (GB)
(74) Representative: Kramer, Dani

(57) **Abstract**

There is described an apparatus (8) for recording a transaction on a blockchain, the apparatus comprising: a receptacle (2008) for receiving a recyclable material from a depositor; a sensor (2010) for determining a property of the material; and a communication interface for recording a transaction on a blockchain, the transaction being dependent on the property of the material.

## Description

### Field of invention

The present invention relates to an apparatus for recording a transaction on a blockchain as well as a system comprising such an apparatus and a method of using such an apparatus.

### Background

Tracking and influencing the usage and processing of materials is a common goal. For example, it is desirable to track the usage of plastics in order to encourage the use of recyclable plastics and to encourage the recycling of these plastics. This enables companies to advertise that they recycle a large amount of plastics and enables consumers to buy their products from eco-friendly companies. However, at the present time it can be difficult to incentivise the usage and the recycling of materials. Furthermore, it can be difficult for companies involved in recycling to evidence this recycling, so that consumers and third party auditors and governments can find it difficult to trust the claims made by companies.

### Summary of the Disclosure

Aspects and embodiments of the present invention are set out in the appended claims. These and other aspects and embodiments of the invention are also described herein.

According to an aspect of the present disclosure, there is described an apparatus for recording a transaction on a blockchain and/or for receiving a deposit of material, the apparatus comprising: a receptacle for receiving a recyclable material from a depositor; a sensor (or a plurality of sensors) for determining a property of the material; and a communication interface for recording a transaction on a blockchain, the transaction being dependent on the property of the material.

Preferably, the apparatus is associated with an account on the blockchain.

Preferably, the apparatus is arranged to record the transaction in dependence on a blockchain account associated with the apparatus.

Preferably, the transaction is associated with the transfer of a token on the blockchain.

Preferably, recording the transaction comprises recording the transfer of the token to a party selected by the depositor. Preferably, recording the transaction comprises recording the transfer of the token to the depositor.

Preferably, the apparatus comprises a user interface for receiving a parameter of the depositor.

Preferably, the processor and/or the user interface is arranged to determine a blockchain address associated with the depositor.

Preferably, the transaction is dependent on a parameter of the depositor and/or on the previous activity of the depositor.

Preferably, the transaction is dependent on a cumulative amount of material deposited by the depositor.

Preferably, the property comprises one or more of: an amount of material; a weight of material; a type of material; a value of material; a brand of material; and a creator and/or seller of the material.

Preferably, the apparatus comprises a user interface for providing a reward to the depositor.

Preferably, the blockchain comprises a permissioned blockchain. Preferably, parties are required to provide identifying information before using the blockchain.

Preferably, the blockchain is configured so that only permissioned apparatuses and/or devices are able to record transactions on the blockchain.

Preferably, the blockchain comprises an account model blockchain.

Preferably, the blockchain is configured so that an eligibility of the depositor to participate in the addition of blocks to the blockchain is dependent on a deposit by the depositor.

Preferably, the apparatus comprises a removal receptacle for removing material from the apparatus.

Preferably, the removal receptacle is arranged so that material is removable in dependence on the transfer of an asset to the apparatus, preferably on the transfer of a token associated with the blockchain, more preferably on the transfer of a token to an address and/or an account associated with the apparatus.

Preferably, the communication interface is arranged to record a detail of the removal on the blockchain, preferably to record a weight and/or value of removed material.

Preferably, the transaction is dependent on a user input. Preferably, the transaction is dependent on a user input from the owner of the apparatus and/or a user input from a controlling entity of the blockchain.

Preferably, the apparatus comprises a user interface for displaying audio and/or video. Preferably, the user interface is arranged to display audio and/or video in dependence on the transfer of an asset. Preferably, the user interface is arranged to display audio and/or video in dependence on the transfer of a blockchain token to an address and/or an account associated with the apparatus.

Preferably, the transaction is associated with audio and/or video being displayed by the user interface.

Preferably, the processor is arranged to determine an amount of an asset stored by an address and/or an account associated with the apparatus. Preferably, the communication interface is arranged to transmit a notification to a further computer device when the amount falls below a threshold.

Preferably, the apparatus comprises a pre-processing mechanism arranged to process the material. Preferably, the pre-processing mechanism is arranged to crush the material.

Preferably, the communication interface is arranged to record details of the pre-processing on the blockchain.

Preferably, the material comprises one or more of: plastic, glass, and aluminium.

Preferably, the blockchain is arranged to record properties of the material and/or processes associated with the material following the removal of the material from the machine. Preferably, the blockchain is arranged to record the arrival of the material at a processing facility.

Preferably, the blockchain is arranged so that a controlling entity of the blockchain is able to issue, burn, lock, and/or unlock tokens on the blockchain.

Preferably, a processor of the apparatus is arranged to determine an achievement associated with the depositor. Preferably, the communication interface is arranged to record the achievement on the blockchain.

Preferably, the achievement is associated with one or more of: the depositor reaching a cumulative deposit threshold; the depositor having deposited a group of different materials; the depositor having deposited material regularly and/or for a certain period of time; and the depositor having used a reward in a specified way.

Preferably, the transaction comprises an identifier arranged to be referred to by a later transaction, wherein the later transaction is associated with a property of the material determined following processing of the material, and wherein a reward for the depositor is dependent on the later transaction.

According to another aspect of the present disclosure, there is described a system comprising a plurality of apparatuses according to any preceding claim.

According to another aspect of the present disclosure, there is described a system comprising a plurality of apparatuses, wherein each apparatus comprises: a receptacle for receiving a recyclable material; a sensor for determining a property of the material and/or a mechanism for processing the material; and a communication interface for recording a transaction on a blockchain, the transaction being dependent on the property of the material and/or the processing of the material.

Preferably, each apparatus is associated with a different account on the blockchain.

Preferably, the system comprises one or more of: an apparatus for receiving the material; an apparatus for transporting the material; an apparatus for processing the material; an apparatus for shredding the material; an apparatus for crushing the material; an apparatus for extruding the material; an apparatus for pelletising the material; an apparatus for outputting pellets of the material.

Preferably, the system comprises one or more computer devices, wherein the computer devices comprise nodes of the blockchain. Preferably, the computer devices are arranged to view and/or record information on the blockchain.

According to another aspect of the present disclosure, there is described a method of recording a transaction on a blockchain, the method comprising: receiving a recyclable material from a depositor; determining a property of the material; and recording a transaction on a blockchain, the transaction being dependent on the property of the material.

Preferably, the method is a computer-implemented method.

According to another aspect of the present disclosure, there is described a computer-implemented method of outputting a transmission to a second node of a blockchain, the method being performed by a first node of the blockchain, the method comprising: identifying a process applied to a recyclable material; identifying a property of the material before and/or after the process; and recording a transaction on a blockchain, the transaction being dependent on the property of the material.

Where aspects of the disclosure are described with reference to a deposit (e.g. the determination of a weight or value), it will be appreciated that more generally the blockchain disclosed herein may be used to record the performance of any process carried out on material.

According to another aspect of the present disclosure, there is described a computer-implemented method of outputting a transmission to a second node of a blockchain, the method being performed by a first node of the blockchain, the method comprising: identifying a recyclable material received from a depositor; identifying a property of the material; and recording a transaction on a blockchain, the transaction being dependent on the property of the material.

Preferably, the method comprises: identifying a previous transaction of the blockchain that is associated with the same material; comparing the property of the material to a previous property recorded in the previous transaction; and outputting a notification in dependence on a discrepancy between the property and the previous property.

According to another aspect of the present invention, there is described a computer-implemented method of determining a discrepancy, the method comprising: identifying a transaction on a blockchain associated with a recyclable material; identifying a previous transaction on the blockchain that is associated with the same material; determining a property of the material from the transaction; determining a previous property of the material from the previous transaction; and comparing the property to the previous property recorded in the previous transaction; and outputting a notification in dependence on a discrepancy between the property and the previous property.

Preferably, the property comprises one or more of: an amount of material; a weight of material; a type of material; a value of material; a brand of material; and a creator, manufacturer, and/or seller of the material.

Preferably, the method comprises identifying a reference in the transaction to one or more previous transactions associated with the same material. Preferably, the method comprises outputting a value associated with said previous transactions.

Preferably, the method comprises identifying transactions associated with one or more of: the receipt of material; the transporting of material; the processing of material; the shredding of material; the crushing of material; the extruding of material; the pelletising of material; and the outputting of pellets of material.

Preferably, the method comprises determining and/or outputting an origin of the material and/or a history of the material.

According to another aspect of the present disclosure, there is described a blockchain comprising a transaction, wherein the transaction: references a recyclable material received from a depositor; references a property of the material; comprises a reward in dependence on the property; and references the output of the reward to a node of the blockchain.

According to another aspect of the present disclosure, there is described a blockchain comprising a transaction, wherein the transaction: references a recyclable material received from a depositor; and wherein the transaction is dependent on a property of the material.

According to another aspect of the present disclosure, there is described an apparatus arranged to implement the aforesaid method and/or arranged to store, view, and/or interact with the aforesaid blockchain.

Aspects of the disclosure (and the preceding statements of invention) that reference a component of the apparatus may more generally be performed by a node of the blockchain. For example, the processor of the apparatus may be arranged to determine an achievement associated with the depositor. More generally, a node of the blockchain may be arranged to determine such an achievement (where this node may or may not have received a deposit).

The invention extends to any novel aspects or features described and/or illustrated herein.

Further features of the disclosure are characterised by the other independent and dependent claims.

Any feature in one aspect of the disclosure may be applied to other aspects of the disclosure, in any appropriate combination. In particular, method aspects may be applied to apparatus aspects, and vice versa.

Furthermore, features implemented in hardware may be implemented in software, and vice versa. Any reference to software and hardware features herein should be construed accordingly.

Any apparatus feature as described herein may also be provided as a method feature, and vice versa. As used herein, means plus function features may be expressed alternatively in terms of their corresponding structure, such as a suitably programmed processor and associated memory.

It should also be appreciated that particular combinations of the various features described and defined in any aspects of the disclosure can be implemented and/or supplied and/or used independently.

The disclosure also provides a computer program and a computer program product comprising software code adapted, when executed on a data processing apparatus, to perform any of the methods described herein, including any or all of their component steps.

The disclosure also provides a computer program and a computer program product comprising software code which, when executed on a data processing apparatus, comprises any of the apparatus features described herein.

The disclosure also provides a computer program and a computer program product having an operating system which supports a computer program for carrying out any of the methods described herein and/or for embodying any of the apparatus features described herein.

The disclosure also provides a computer readable medium having stored thereon the computer program as aforesaid.

The disclosure also provides a signal carrying the computer program as aforesaid, and a method of transmitting such a signal.

The disclosure extends to methods and/or apparatus substantially as herein described with reference to the accompanying drawings.

Embodiments of the disclosure are described below, by way of example only, with reference to the accompanying drawings.

### Brief Description of the Drawings

Figures 1 a and 1 b show systems comprising a plurality of parties.
Figure 2a illustrates a computer device on which aspects of the disclosure can be implemented.
Figure 2b shows an exemplary embodiment of a reverse vending machine into which material can be deposited.
Figure 3 shows a method of providing a reward to a depositor using a reverse vending machine.
Figures 4a and 4b show methods for tracking the processing of materials.
Figure 5 shows a method of a corporation verifying the recycling of materials.

### Detailed Description of the Embodiments

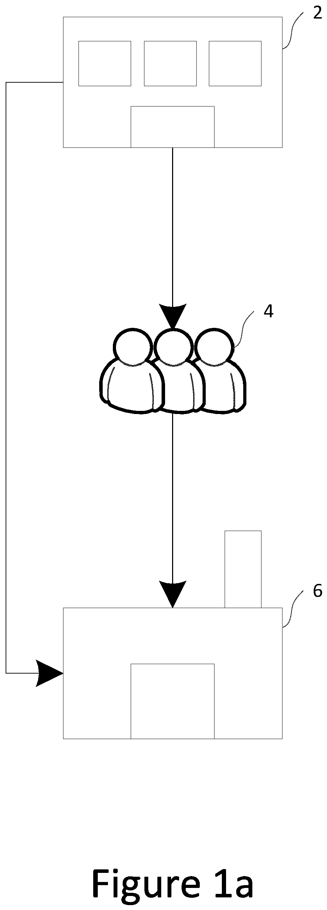

Referring to Figure 1a, there is shown a system comprising a plurality of parties. Specifically, the system comprises a vendor 2, one or more consumers 4, and a recycler 6.

In this system, the consumers 4 purchase goods from the vendor 2. The recycler 6 is able to recycle these goods. To achieve this, the recycler receives goods from the vendor or the consumers. Equally, the recycler may acquire the goods in some other manner (e.g. the recycler may have an agreement with a garbage collecting company to acquire the goods from rubbish bins).

The present disclosure provides a way to track the flows of material (e.g. plastic) through such a system. The disclosed methods and apparatuses may also be used to monitor the behaviour of each of the parties of the system. These disclosures may further be used to incentivise certain behaviours; for example, parties that contribute to the recycling of plastics may be rewarded.

The present disclosure is intended in particular to track and incentivise the recycling of plastics. However, it will be appreciated that more generally the disclosures herein are useable to track and/or incentivise a range of behaviours, in particular the processing of materials (e.g. plastic, glass, aluminium, etc.). The disclosures herein are particularly applicable to the tracking of materials throughout a supply chain, where these disclosures can be used to incentivise recycling and the minimising of energy use or wastage.

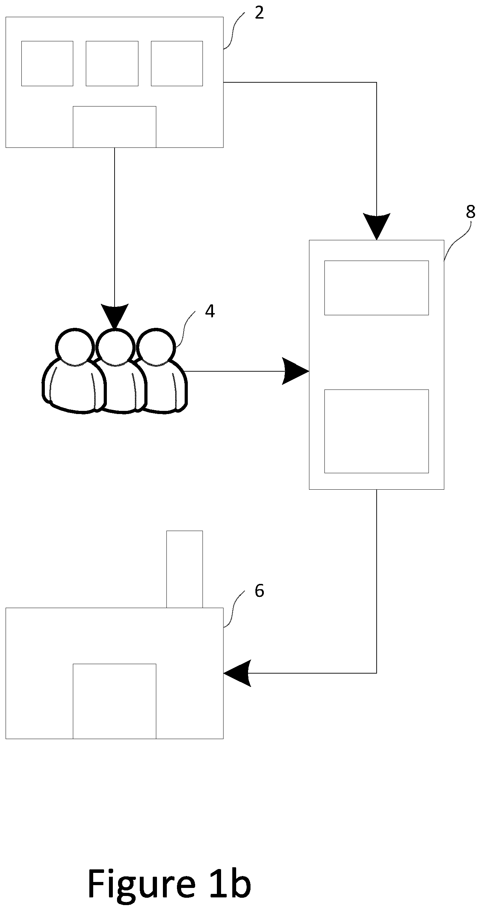

Referring to Figure 1b, in some embodiments the system includes an apparatus for receiving material; such an apparatus is referred to herein as a reverse vending machine (RVM) 8. The reverse vending machine is arranged to receive material, such as plastic, which can be recovered later by the recycler 6. This provides a straightforward way for the vendor 2 and the consumers 4 to provide material to the recycler for processing.

The reverse vending machine 8 is also able to reward the party depositing the material. For example, the reverse vending machine may identify a name of a depositor, or a bank account of the depositor, so that the reverse vending machine can transfer funds to the depositor in return for the deposit of material.

In some embodiments, the reverse vending machine 8 comprises a store of money and/or vouchers so that a party can deposit material and receive a reward without the need to provide any personal information. The reverse vending machine may also provide a non-financial reward, for example the reverse vending machine may provide a product and/or a badge.

Typically, the reverse vending machine 8 is arranged to provide the reward by recording a transaction and/or the reward on a blockchain. This reward may relate to an amount of a cryptocurrency that is transferred to the depositor. Equally, the reward may be a recording of certain details of the depositor that enables this depositor to evidence the deposit. For example, the reward may be to indicate an amount of recycled material on the blockchain, where the depositor may benefit from the recording of their behaviour - in a practical example, the depositor may be required to recycle a certain amount of material in order to benefit from a government grant. The use of a blockchain enables the details of the deposit to be recorded in an immutable manner and enables these details to be output following the deposit.

In order to provide a suitable reward, the reverse vending machine 8 may be arranged to determine a property of the deposit, where the recording of the deposit and/or the reward provided depends on this property. For example, the reverse vending machine may determine one or more of:
- An amount of deposited material.
- A type of the deposited material.
- A value of the deposited material.
- A deposited product.
- A creator and/or seller of the deposited material (or more generally another party relating to the material). For example, the reverse vending machine may identify which company created a plastic bottle and/or which company sold this plastic bottle. To do this, the reverse vending machine may be arranged to scan a barcode of a deposit.
- A feature of the depositor, such as a previous amount of material deposited and/or an amount of progress to a deposit quota.

This property may be recorded on the blockchain, so that the blockchain comprises a record of a deposit, an amount and/or value of that deposit, and an indication of the depositor. By determining and/or rewarding a creator or seller of the material on the blockchain, companies are able to evaluate whether their products are being recycled regularly. This information may be used in marketing campaigns or may be used to alter products to incentivise recycling. For example, if a company identifies that a certain product is rarely recycled, they may change the labelling on this product to emphasise its recyclability.

In practice, a depositor typically receives a greater reward for depositing a large amount of material (as compared to the reward for depositing a smaller amount of material). Similarly, the depositor may receive a bonus once they have cumulatively deposited a certain amount of material. Furthermore, the reward may depend on a type of the material, so that a depositor may receive a higher reward for recycling aluminium or for recycling a rarely-recycled product.

The depositor may be provided with a type of reward (or token) that depends on the material deposited; for example, the deposit of plastic may result in the depositor receiving a first type of token and the deposit of metal may result in the depositor receiving a second type of token. These tokens are typically each related to the same blockchain and may be exchangeable (e.g. the first type of token may be worth a multiple of the second type of token). In some embodiments, different types of token are useable for different purposes, for example the first type of token may be useable for renting advertising space on the reverse vending machine 8, whereas the second type of token may not be useable for this purpose.

For certain deposits and/or actions, users may be provided with non-fungible tokens (NFTs). For example, the deposit of a particularly rare material may result in an NFT being provided to the depositor so that the depositor is able to evidence their deposit. Such an NFT may also be minted once the material has been processed, e.g. so that a purchaser of a good made from recycled material is able to identify the origin of the recycled material and/or the processing plant that recycled the material.

In order to provide the reward to the correct address, the reverse vending machine 8 may be arranged to receive a blockchain address; for example, the reverse vending machine may comprise a barcode and/or QR code scanner to receive the address, or a user interface to receive a character input. Receiving the blockchain address may comprise receiving login details from a depositor that enable the reverse vending machine to determine a blockchain address associated with the user.

Where a blockchain is used, the blockchain may be a permissioned blockchain, where only certain users are able to be involved in transactions on the blockchain. The use of a permissioned blockchain enables the parties using the blockchain to be limited. Therefore, parties may need to provide identifying information (such as a name) before using the blockchain and/or before depositing material. This allows accurate monitoring of the parties and their behaviour.

In some embodiments, the blockchain is a permissionless blockchain, where any party is able to be involved in a transaction on the blockchain. This decreases the barriers to users being involved in the recycling of materials; however, this can reduce the accuracy of the tracking of materials. With a permissionless blockchain, the recording of certain information can still be enforced by configuring the reverse vending machine 8 to require certain information before accepting a deposit.

Typically, the blockchain comprises a distributed ledger and/or a decentralised blockchain. More generally, it will be appreciated that various types of blockchains may be used depending on the implementation of the disclosures herein.

In some embodiments, the ability to participate in the building of a consensus on the blockchain (e.g. the ability to propose blocks for addition to the blockchain) is dependent on a deposit. More specifically, the consensus mechanism of the blockchain may be dependent on the deposits of each node, where nodes that have deposited large amounts of material are more likely to be selected as the proposers and/or validators of blocks of the blockchain. This may be used to provide a 'proof-of-material-deposit' consensus mechanism.

By using such a consensus mechanism and configuring the blockchain so that a reward is provided to nodes that participate in the addition of blocks to the blockchain, the depositing of material can be incentivised. In practice, the effect of a deposit may have a limited duration and/or an effect that depends on the deposit. Therefore, a node may be selected to propose a block from a pool of eligible nodes, where the pool is composed of nodes that have made a deposit in a certain time period and/or nodes that have made a deposit with certain properties (e.g. a certain size and/or volume).

In practice, the system typically comprises a plurality of vendors, a plurality of consumers, a plurality of recyclers, and a plurality of reverse vending machines. These reverse vending machines may be located in different places and/or have different properties. For example, large reverse vending machines capable of receiving large amounts of material may be located near industrial parks and smaller reverse vending machines may be located in neighbourhood convenience stores. The vending machines may all be connected to a single network (e.g. the internet) so that the behaviour of different users can be analysed and compared. This enables a way of tracking the usage of various materials and the behaviours of various users. Since each reverse vending machine is typically connected to a single network (e.g. the internet), the same user is able to use a plurality of machines while receiving credit for cumulative deposits.

The reverse vending machines may each be owned and/or operated by different parties, and the rewards offered may differ depending on the configuration of each reverse vending machine. This enables the owners of the reverse vending machines to potentially turn a profit, thereby encouraging the installation of reverse vending machines. Therefore, the reward may be dependent on a user input and/or dependent on a configuration of the reverse vending machine (which configuration is arranged to be set by a controller and/or an owner of the reverse vending machine). Similarly, a percentage of any transaction may be taken as a fee by the controller of the blockchain so that the party that provides the blockchain is able to make a revenue from the use of the blockchain.

In order to provide rewards, the reverse vending machine 8 may be preloaded with an amount of a cryptocurrency (and/or with another reward). The reverse vending machine may be associated with a blockchain account and/or a blockchain address to enable this preloading and also to enable the transfer of the reward. In particular, the blockchain may comprise an account model blockchain so that funds can be repeatedly transferred into and out of the account and the usage of the reverse vending machine can be easily tracked. The reverse vending machine may be arranged to transmit an output when the amount of cryptocurrency falls below a certain amount (e.g. to notify the owner of the reverse vending machine that a deposit should be made).

It will be appreciated that other blockchain types (e.g. unspent transaction output blockchains) may also be used.

Figures 1a and 1b show a simple example of a system that comprises the vendor 2, consumers 4, and the recycler 6. It will be appreciated that in practice the system comprise different parties and/or additional parties. For example, the parties to the system may include one or more of:
- Users (or depositors). Users are able to deposit material into the reverse vending machine 8 in order to receive a reward, such as cryptocurrency tokens. Users may then sell, hold or exchange these tokens to receive discounts, vouchers and or donate to charities.
- Corporations. Corporations are typically able to buy tokens from liquidity pools and centralised exchanges and to transfer these tokens to recyclers in return for these recyclers retrieving material from reverse vending machines. The corporations can also utilise the tokens to run reverse vending machines to sponsor and benefit from the collection and recycling of bottles within a network of reverse vending machines by recycling partners.
- Recyclers. Recyclers receive tokens from corporations or from exchanges in return for retrieving material from the network of reverse vending machines or for collecting plastic from parties in the system. The use of the blockchain provides full traceability.
- Partners. Partners receive tokens from users that exchange their tokens for rewards, vouchers and experiences. Partners may pay in tokens for placement of their branding on prime located reverse vending machines or within the native wallets of users. Typically, partners can swap or exchange their tokens for cash pay-outs or trade their tokens on centralised and decentralised exchanges for other blockchain assets.
- Advertisers. Advertisers are able to place their advertisements on reverse vending machines.
- Environmental organizations & charities. Environmental organizations and charities receive tokens and can swap these tokens for fiat currency.
- A controlling entity. The controlling entity may be able to control the supply of tokens and to control the consensus mechanisms of the blockchain.

While the description primarily considers the reward of cryptocurrency tokens that have a monetary value, it will be appreciated that the tokens (and more generally any reward) may have a non-monetary value. For example, the tokens may be useable to hire advertising space on the reverse vending machines, where this space may only be hireable via tokens. Typically, there is a free market provided for tokens, with the tokens being tradeable. This enables parties to buy and sell tokens. In some embodiments, the transfer of tokens is restricted. Therefore, possession of tokens may be limited to those parties that have been directly (e.g. physically) involved in recycling. In some embodiments, transactions on the blockchain identify a type of transaction - specifically, the blockchain may record whether a transaction is associated with a deposit of material and/or whether a transaction is associated with a transfer of another currency.

Any of the mentioned parties may be a node of the blockchain. Therefore, the use of a blockchain enables the deposit of materials between these parties to be tracked, recorded, and rewarded. The use of the blockchain simplifies the collection and redemption of rewards in the system while also providing additional functionality and an immutable record of the deposit. For example, users that deposit material may receive a token that relates to the blockchain. This token may then be traded for a fiat currency. Equally, this token may be used to buy advertising space on the reverse vending machine 8, may be traded with another party, or may be presented to a regulatory body as evidence of that user's involvement with recycling.

By using blockchain tokens instead of fiat currencies, there is provided a mechanism by which the credentials of parties of the system can be evaluated. Furthermore, the token system can be used so that certain actions (e.g. the hiring of advertising space on the reverse vending machine 8) require tokens as opposed to fiat currency. Therefore, viewers of adverts on the reverse vending machine can be confident that the advertising company has, in some way, contributed to the deposition of material. Typically, the blockchain is used to track recycling, so the use of adverts on the reverse vending machine can be used to advertise a company's green credentials.

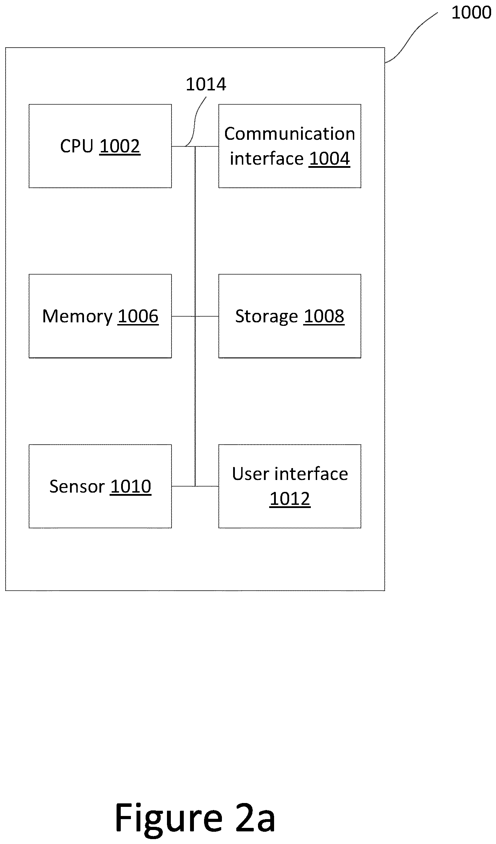

Referring to Figure 2a, the reverse vending machine 8 is typically implemented on a computer device 1000. Further, the parties typically interact with (e.g. view and add to) the blockchain using one or more computer devices, where one or more of the parties in the system may comprise nodes of the blockchain. Typically, the blockchain is a decentralised and/or distributed blockchain so that parts and/or copies of the blockchain are stored on a plurality of different computer devices.

Each computer device 1000 typically comprises a processor in the form of a CPU 1002, a communication interface 1004, a memory 1006, storage 1008, a sensor 1010, and a user interface 1012 coupled to one another by a bus 1014. It will be appreciated that the computer devices may comprise different components depending on the purpose of those devices (e.g. the reverse vending machine 8 may comprise a sensor to evaluate deposited material, while a validating node of the blockchain may not require such a sensor).

The CPU 1002 executes instructions, including instructions stored in the memory 1006 and/or the storage 1008.

The communication interface 1004 is typically an Ethernet network adaptor coupling the bus 1014 to an Ethernet socket. The Ethernet socket is coupled to a network, such as the Internet. The communication interface facilitates communication between different computer devices. It will be appreciated that any communication medium may be used by the communication interface, such as area networks (e.g. the Internet), infrared communication, and Bluetooth^{®}.

The communication interface 1004 is useable to record information on the blockchain; in particular, the communication interface is usable to transmit transactions to nodes of the blockchain, and to propagate blocks through the blockchain (e.g. to propose and/or validate blocks). For example, the reverse vending machine 8 may comprise a node of the blockchain and may be arranged to transmit a transaction to another node of the blockchain in order to record this transaction on the blockchain (where this other node is able to include the transaction in a proposed block). Equally, the reverse vending machine may be arranged to propose transactions and/or blocks for addition to the blockchain.

The memory 1006 stores instructions and other information for use by the CPU 1002. The memory is the main memory of the computer device 1000. It usually comprises both Random Access Memory (RAM) and Read Only Memory (ROM).

The storage 1008 provides mass storage for the computer device 1000. In different implementations, the storage is an integral storage device in the form of a hard disk device, a flash memory or some other similar solid state memory device, or an array of such devices.

The sensor 1010 enables the computer device to determine a property of a deposited material and/or a remaining capacity of the computer device. The sensor may for example comprise a weighing scale, a barcode reader and/or an infrared sensor. The sensor may comprise a plurality of sub-sensors, which each measure a different property of the deposited material.

The user interface 1012 enables users to interact with the computer device 1000. For example, the user interface may comprise a screen and/or an input that enables a user to input information. Furthermore, for the reverse vending machine 8 the user interface may comprise a receptacle that enables the insertion of material into the reverse vending machine.

Typically, the reverse vending machine 8 comprises a user interface that enables the reverse vending machine to show advertisements. The reverse vending machine may be arranged to display advertisements in return for an amount of tokens, which tokens are associated with the depositing of material.

A computer program product is provided that includes instructions for carrying out aspects of the method(s) described below. The computer program product is stored, at different stages, in any one of the memory 1006, the storage 1008 and/or a removable storage (e.g. a universal serial bus storage device). The storage of the computer program product is non-transitory, except when instructions included in the computer program product are being executed by the CPU 1002, in which case the instructions are sometimes stored temporarily in the CPU or memory. It should also be noted that the removable storage is removable from the computer device 1000, such that the computer program product may be held separately from the computer device from time to time. Different computer program products, or different aspects of a single overall computer program product, are present on the computer devices used by any of the users.

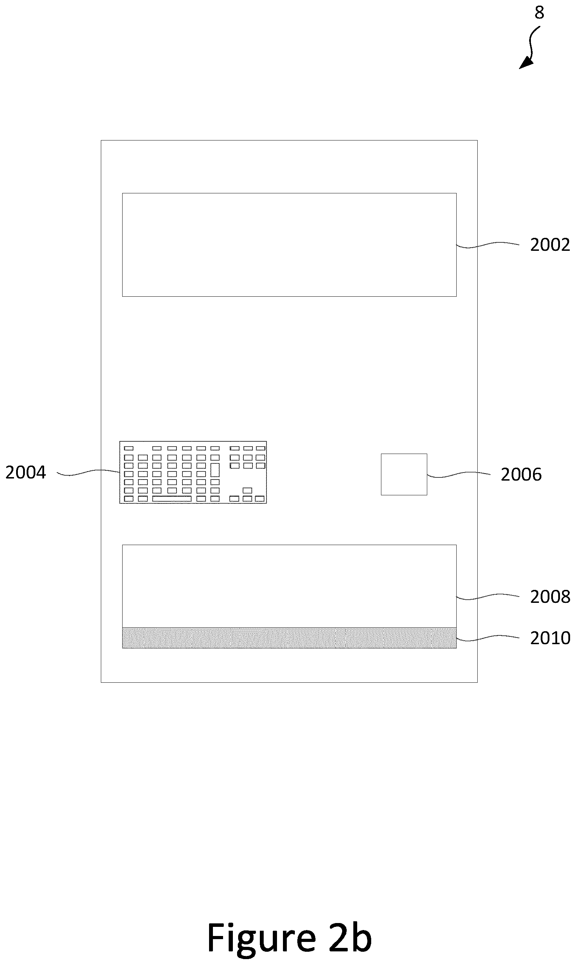

Referring to Figure 2b, there is shown an exemplary embodiment of the reverse vending machine 8. This embodiment of the reverse vending machine 8 comprises a screen 2002 for advertising; an input for a user to enter details (here the input comprises a keyboard 2004 and a QR scanner 2006), which enables a user to enter a blockchain address and/or to control elements of the operation of the user interface (e.g. to change an advert displayed on the screen); a receptacle 2008 for receiving material; and a sensor 2020 for determining a property (e.g. the weight) of the material. It will be appreciated that various other configurations of the reverse vending machine 8 are possible.

For example, the reverse vending machine 8 may be an apparatus suitable for use by individuals for small deposits as shown in Figure 2b (e.g. the reverse vending machine may be installed in a shopping centre alongside regular vending machines). Equally, the reverse vending machine may be an apparatus suitable for use by commercial depositors (e.g. it may comprise an industrial weighing scale capable of measuring deposits of thousands of kilograms). Large reverse vending machines may be installed at processing facilities and industrial sites. The 'receptacle' of such large vending machines may comprise a large space into which material can be placed, where this space may not be entirely enclosed (e.g. the receptacle may be an open space above a large weighing plate).

Equally, material may be picked up from sites for delivery to the recycler 6, e.g. by recycling trucks. These trucks may each comprise a reverse vending machine so that the trucks are able to receive deposits and determine appropriate rewards for the depositors. Therefore, a recycling bin could be emptied into a truck, where the truck then records the deposit on the blockchain. In practice, there may be provided a system including a recycling bin with a QR code, which QR code comprises a blockchain address. Therefore, a recycling truck (that comprises a reverse vending machine) is able to receive a deposit by emptying the recycling bin into the truck and to reward the depositor by scanning the QR code and transferring a token to a blockchain address associated with the QR code.

The nodes of the blockchain may be arranged to record a type of deposit on the blockchain; for example, the nodes may be arranged to record the ID of the reverse vending machine that receives the deposit, or the nodes may be arranged to record whether the deposit was received by a reverse vending machine in a truck or a reverse vending machine in a shopping centre).

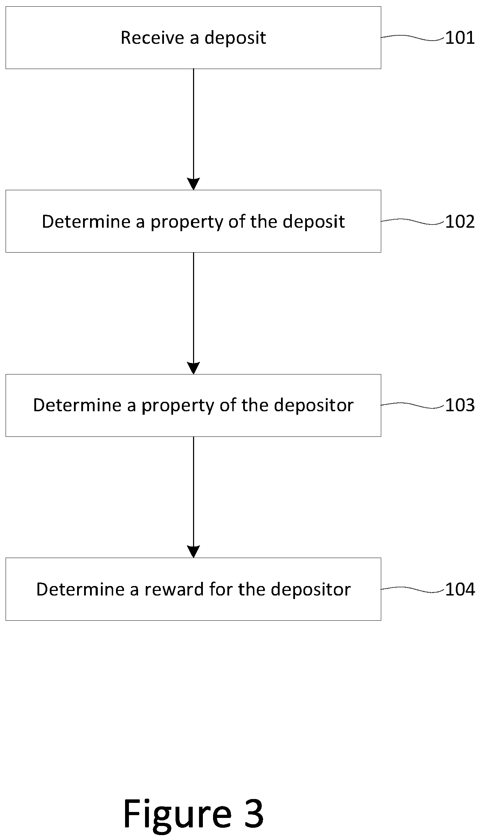

Referring to Figure 3, there is described a method of providing a reward to one of the parties in return for that party depositing material in the reverse vending machine 8.

In a first step 101, the reverse vending machine 8 receives a deposit of a material.

In a second step 102, the reverse vending machine 8 determines a property of the deposit. Determining the property may comprise determining a type of material (e.g. determining whether the material is a plastic and/or is recyclable) and/or may comprise determining a weight, age, value, etc. of the material.

In a third step 103, the reverse vending machine 8 determines a property of the depositor. Determining this property may comprise determining a name, an affiliation (e.g. employment details) and/or determining a blockchain address associated with the depositor.

In a fourth step 104, the reverse vending machine 8 determines a reward for the depositor. This reward is typically a token associated with a blockchain. The reward is typically dependent on the properties of the deposit and/or the depositor.

In a fifth step 105, the reverse vending machine 8 provides the reward to the depositor. This may comprise dispensing an amount of money, a token, and/or a physical reward (e.g. a badge that confirms the depositor has recycled material). Typically, providing the reward comprises the reverse vending machine transferring a token on a blockchain to an address associated with the depositor.

In some embodiments, properties of the deposit, such as the amount of material deposited and/or the name of the depositor are recorded on the blockchain. This enables the depositor to evidence their deposit

In some embodiments, the depositor is able to select a type of reward and/or a recipient of the reward. For example, the depositor may be able to select a charity to which the reward is provided. Equally, the depositor may be able to select a party to which the details are sent. This may involve the party providing contact details for a third party, where the reverse vending machine transmits a notification to this party (e.g. a link to a blockchain viewer). This enables the depositing party to immediately demonstrate to a third party that they have made a deposit.

Typically, the parties are able to trade their rewards (e.g. to trade tokens of the blockchain). The parties may be able to trade the tokens for currencies and/or for services.

Corporations may buy tokens from users who have deposited material in order to encourage recycling and to boost their green credentials, since the blockchain will indicate that the corporations hold the tokens and are therefore involved in recycling.

Corporations may also install reverse vending machines, where the corporations then pay users for depositing material in the reverse vending machines and sell the deposited material to recyclers. This provides users with a simple way to deposit material (and a simple way to be paid) and provides corporations with an opportunity to make a profit by selling the deposited material to recyclers at a higher price.

Typically, the material continues to be tracked after the depositing of the material. For example, the deposited material may be recycled and then used in new products. The blockchain may be used to track this process so that depositors are able to see the consequences of their deposits. This also provides a way to track the behaviour of recyclers and to hold these recyclers to account if their practices are undesirable or inefficient.

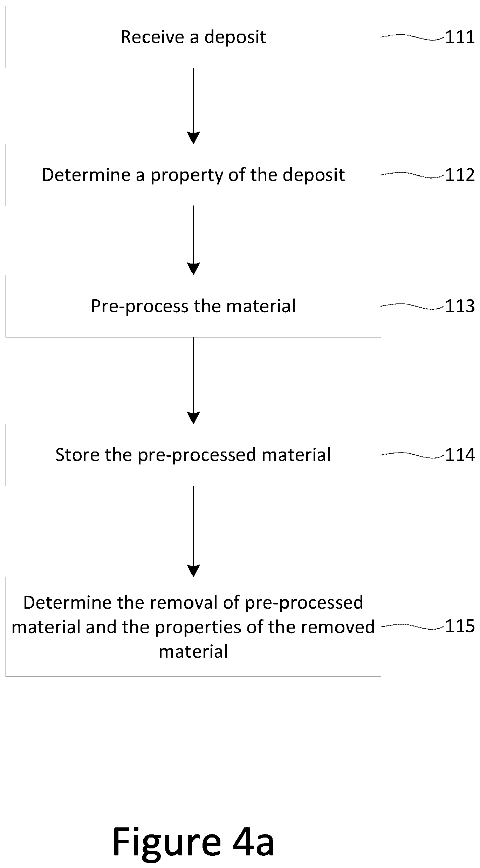

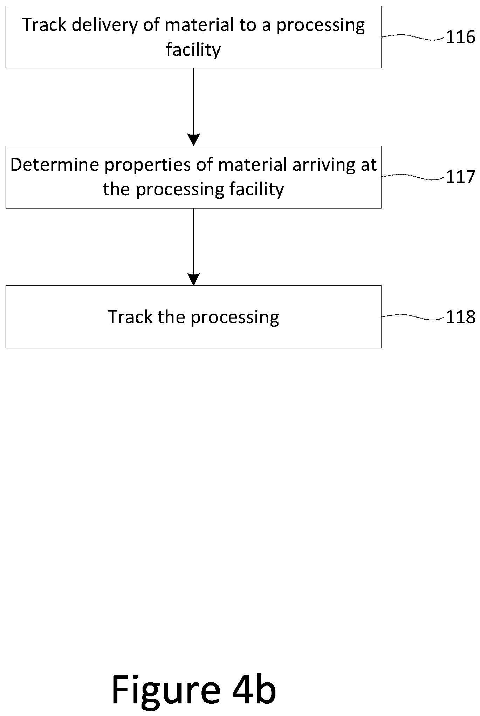

Referring to Figures 4a and 4b, there are shown, respectively, methods that may be performed by the reverse vending machine and by the recycler 6.

Referring to Figure 4a, as described with reference to Figure 3, in a first step 111 of a method performed by the reverse vending machine 8, the reverse vending machine receives a deposit of material and in a second step 112 the reverse vending machine determines a property of the deposit.

In a third step 113, the reverse vending machine 8 pre-processes the material and in a fourth step 114, the reverse vending machine stores the pre-processed material. Typically, this comprises the reverse vending machine crushing the deposited material and then storing the crushed material in a storage compartment. Further pre-processing may be performed so that the material is easier to transport; for example, the material may be melted, or chemicals may be added to the material to break down the material.

The properties of the deposited material and the pre-processing steps performed may be recorded on the blockchain. This enables the nodes of the blockchain to view these properties. In some embodiments, this information may be available only to the recycler 6 and/or to the owner of the reverse vending machine 8.

In a fifth step 115, the pre-processed material is removed from the reverse vending machine 8. Typically, this comprises the recycler 6 collecting the pre-processed material.

The properties of the removed material, such as the weight of the removed material and the type of the removed material are determined and recorded on the blockchain. This enables the material to be tracked to ensure that all of the material removed from the reverse vending machine 8 is delivered to a processing facility.

In order to remove the material, the reverse vending machine 8 may require the deposit of an amount of tokens and/or an amount of currency. In this way, the reverse vending machine can be kept stocked of tokens and the owner of the reverse vending machine can receive payment for the material. In practice, each reverse vending machine may be associated with an account on a blockchain so that a party depositing material to the reverse vending machine receives tokens from this account (these tokens being deposited into an account associated with said party). Similarly, a party removing material may need to transfer tokens into the account in order to make the removal. This is of particular use where the reverse vending machine is operated by a corporation that pays users to provide material and then receives payment from recyclers who can resell the material (once it has been recycled).

Referring to Figure 4b, in a sixth step 116 after the material has been removed from the machine, the delivery of the material to a processing facility is tracked (e.g. using a GPS sensor). The tracking information may then be recorded on the blockchain; this information may be added to the blockchain by the recycler 6, or may be automatically added by a computer device that is triggered by the arrival of a vehicle at the processing facility.

In a seventh step 117, the properties of the material arriving at the processing facility are determined; these properties can then be recorded on the blockchain. The recording of the removal of material from the reverse vending machine 8 and of material entering processing facilities is useable to audit the recyclers - in particular any change in weight between the removal of the material from the reverse vending machine and the entrance of the material to the processing facility may prompt an investigation into the recycler. Furthermore, this recording of information on the blockchain enable users of the blockchain to assess the behaviour of recyclers (e.g. to see how long it takes a recycler to empty a given reverse vending machine and/or to see what happens to the material once it has been recycled).

In practice, the recording of much of the information may be automated. For example, the reverse vending machine 8 is typically arranged to record on the blockchain the weight of any material removed by a recycler 6. The recycler may be required to have a digital scale at their site so that the weight of incoming material is recorded (e.g. by comparing the incoming weight of a loaded lorry to the outgoing weight of the lorry after unloading). This digital scale may be arranged to record on the transaction this weight of incoming material. In this way, the recording of the material on the blockchain is simplified while also reducing the opportunity for false information to be uploaded.

The blockchain may be configured so that only permissioned devices are able to record information on the blockchain. Disclosed herein is a system comprising a plurality of permissioned devices that are arranged to record information on a blockchain, wherein the permissioned devices include: at least one receiving device for receiving a recyclable material (e.g. the reverse vending machine 8); at least one processing device for processing the recyclable material (e.g. a shredder); and at least one output device for outputting the processed material (e.g. a pelletising machine). Preferably, each of these devices is configured to record information on the blockchain, so that an immutable and complete record of the processing of the material is obtained (and so that the absence of any records is easily noticed).

The nodes proposing and/or validating transactions on the blockchain may be arranged to compare two or more transactions of the blockchain and/or arranged to compare a measured property to a previous transaction. In particular, when a node proposes and/or validates a transaction, this node may compare a property of material referenced in the transaction to a property of material referenced in a previous transaction. So a node that is recording on the blockchain the weight of material entering the processing facility may compare this weight to a weight of material removed from the reverse vending machine 8 (or a weight of material removed from a plurality of reverse vending machines by a collection truck). Where a discrepancy is identified between the properties, the node typically outputs a notification. In practice, this typically comprises the node outputting an alert when there is a discrepancy between the properties; this alert may be sent to an auditor who can review the transactions and identify whether the recycler is misappropriating material (or if there is an error in a sensor etc.).

In an eighth step 118, the processing of the material is tracked. For example, the processing of recycled bottles and/or the use of the recycled material may be tracked. This processing information is then recorded on the blockchain. Typically, the blockchain is arranged so that machines on a processing line are able to record the processing information on the blockchain.

Exemplary processing steps include: cleaning, shredding, extruding, and pelletising. These steps may be used when recycling plastic. The resultant pellets can then be collected and weighed, with this information being recorded on the blockchain. With this recording, users of the blockchain can determine any wastage or material loss throughout the processing from deposition in a reverse vending machine to the formation of the pellets of recycled plastic.

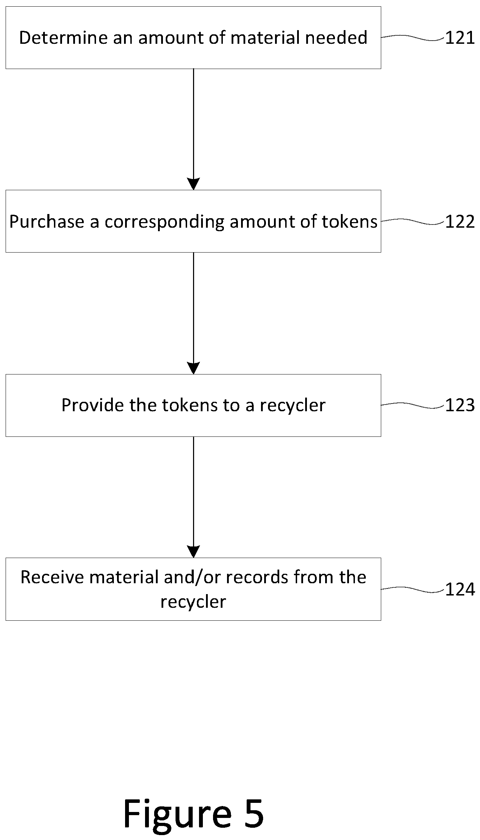

The use of a blockchain and of transferrable tokens enables parties to contribute to recycling, and to evidence this contribution, in a quick and straightforward manner. Referring to Figure 5, there is shown a method that may be performed by a corporation that wishes to meet a recycling target.

In a first step 121, the corporation determines an amount of material needed. This may, for example, comprise a corporation determining an amount of recycling that must be performed in order to benefit from a grant.

In a second step 122, the corporation purchases a corresponding amount of tokens. These tokens may be purchased from a token exchange, from an entity controlling the blockchain, and/or from other nodes of the blockchain who already hold tokens.

In a third step 123, the corporation provides the tokens to a recycler.

In a fourth step 124, the corporation receives either the material and/or a record of the recycling from the recycler.

Typically, the corporation provides a number of tokens to a recycler in return for the recycler agreeing to recycle a certain amount of material. The recycler then provides a record on the blockchain that indicates this amount of material has been collected and recycled. This enables the corporation to provide evidence that they have (indirectly) recycled a certain amount of material.

The corporation may also require a certain type of recycling or material processing to be performed. The corporation may then reach out to an appropriate recycler, where this recycler can provide a record on the blockchain that indicates the recycler has carried out the required type of material processing.

The use of the blockchain enables this record to be confirmed. The deposit of material to the reverse vending machine 8 is typically recorded on the blockchain. The collection of this material by the recycler can similarly be recorded on the blockchain, and details of a product obtained following processing of the material (e.g. recycled pellets) can also be recorded on the blockchain. This final product can be linked to the deposited material by the recycler - and that this final product is in fact derived from the deposited material can be evidenced by properties recorded on the blockchain (e.g. the weights at each stage).

This provides both an audit trail and evidence for each party of their involvement in recycling.

In some embodiments, the provision of the reward to the depositor may be delayed until certain processing steps have been carried out. In practice, it can be difficult to determine a value of a deposit at the reverse vending machine 8 since the sensors needed to determine this value may be large or specialised. Therefore, the value may only be determinable once processing has begun (e.g. when recycling workers have sorted the material). Therefore, the reward to be provided to the depositor may be determined at this point. In practice, this may comprise the reverse vending machine recording the deposit on the blockchain alongside an identifier (this identifier might be a part of the blockchain such as a UTXO address). Once the material has been sorted by the recycler 6, this identifier can be used to provide an appropriate reward to the depositor (e.g. to provide a reward to the UTXO address). Since details of the deposit will have been recorded on the blockchain by the reverse vending machine, the depositor can be confident that the deposit will not be forgotten. While this method of providing a reward requires some delay between the deposit and the reward, this method can be used to determine an appropriate reward more accurately. This method may be used only for rewards of a certain size (where a mis-estimate of the value of deposited material would be significant). In such situations, the reverse vending machine may be arranged to determine a value of a transaction and to provide the reward (or to instead record an identifier) in dependence on this value. In some embodiments, a first portion of the reward is provided following the deposit of material and a second portion of the reward is provided following processing of the material (e.g. following a transaction associated with the processing of the material).

### Blockchain

As described above, aspects of the present disclosure may be implemented using a blockchain, where the parties in the system are nodes of the blockchain.

Implementing aspects of the present disclosure may comprise a first node of the blockchain performing the methods described herein and thereafter transmitting an output to a second node. This may occur when the first node proposes and/or validates a block, where transmitting an output may comprise transmitting a proposed block and/or transmitting a validated block to the second node. The blockchain may be configured so that aspects of the present disclosure must be performed in order for a node to propose, validate, and/or propagate a block.

For example, the blockchain may be configured so that each transaction recorded on the blockchain is required to reference an item of recyclable material, and/or a deposit, transfer, and/or processing of that material.

The use of a blockchain enables the tracking of various aspects of the system in an immutable manner and also provides a straightforward way of rewarding parties in the system.

Typically, the system includes a controlling party that controls the blockchain. This controlling party may be able to issue, burn, lock, and/or unlock tokens on the blockchain. This enables the controlling party to issue tokens to initially stock reverse vending machines and also enables the controlling party to intervene in cases of undesirable behaviour (e.g. if a recycler is found to be behaving improperly).

The controlling entity may also be able to issue new tokens in exchange for fiat currency. This provides a mechanism for the other parties of the system to obtain tokens in the infancy of the system.

The tokens are typically useable to perform one or more of the following actions:
- Retrieve material from reverse vending machines. To retrieve material, recyclers typically need to make a payment in a fiat currency and/or in a cryptocurrency. Where a fiat currency is provided, the reverse vending machine 8 may be arranged to convert this fiat currency into an amount of cryptocurrency in order to stock a blockchain wallet of the reverse vending machine.
- Participate in an advertising network. The reverse vending machines are typically arranged so that organisations can place advertisements on the reverse vending machines. The cost of running the advertisements may be an amount of a token associated with the blockchain so that brands and organisations using the advertising network increase demand on the use of the blockchain. Furthermore, brands and organisations may be able to run promotions/vouchers and rewards which will utilise tokens to pay out.
- Lease a reverse vending machine. Reverse vending machines may be available for hire, where a brand organisation or even an individual may be able to hire RVMs with payment being taken in tokens automatically at the point of rental.
- Purchase and use reverse vending machines. Organisations may be able to purchase reverse vending machines. In this situation, the purchasing organisation is typically able to choose which ads will be placed on the RVM and to keep the advertising revenue. Furthermore, the controlling entity may be able to open up a private advertising network to the purchasing organisation to utilise in return for a monthly fee.
- Access digital services. When a user deposits a plastic bottle into a reverse vending machine and receives tokens into their wallet, they may have a choice to either: automatically donate the proceeds to a charity from a predefined list of charities or save tokens for future redemption or trading. When a user accumulates a certain number of tokens, they may gain points to unlock certain rewards and experiences.
- Issue tokens. One of the functions of the controlling entity is typically to regulate the supply of the tokens. The controlling entity may be able to issue, burn or lock tokens.

To satisfy the demand for the tokens, an adequate supply mechanism is desirable. During the initial release the following mechanisms may be useable by users to obtain tokens.
- Material deposits. When users deposit material into a reverse vending machine they receive tokens.
- Promotional programmes. Received tokens may be usable in partners' promotional programmes and as discounts, air drops, referral bonuses or vouchers.
- Trading venues. Recyclers, advertisers, companies that want to rent reverse vending machines and traders may be able to buy tokens at centralised and decentralised trading venues.
- Exchanges. The controlling entity may be able to issue tokens and then list the native asset on exchanges accessible to a large number of users.

The blockchain as described herein may use any consensus mechanism known in the art. Tokens may be issued to parties that contribute to this consensus mechanism.

In some embodiments, the parties that are able to contribute to the consensus mechanism and/or the parties that are able to view or use the blockchain are limited. This may be used to ensure that each of the parties of the system has provided a threshold amount of identifying information and/or to ensure that only parties that have participated in a certain amount of recycling are able to receive rewards for adding blocks to the blockchain.

Typically, the reverse vending machines are arranged to automatically record information on the blockchain. This may comprise the reverse vending machines submitting transactions to the nodes of the blockchain following interactions between users and the reverse vending machines.

The blockchain can be used to track the actions of each of the parties. Typically, the blockchain is arranged so that certain actions result in achievements being provided to associated users. For example, a user that has recycled a certain amount of material may be awarded with an achievement indicating this amount. This achievement can be recorded on the blockchain and/or can be transmitted between nodes of the blockchain. Furthermore, this achievement may be transmitted to other devices and/or partners, e.g. the achievements may be visible in applications on a user's phone so that the achievements can be used for prestige or for discounts at participating retailers/applications.

Furthermore, the parties may be ranked based on their achievements and/or activities, where a node that is viewing and/or validating the blockchain (or a block of the blockchain) may be arranged to compare the actions and/or achievements of two or more nodes users in order to compare the nodes and to determine a higher performing user. This higher performing user may be given an achievement that is recorded on the blockchain.

The blockchain may be arranged to record one or more of the following features of a depositor, where the reverse vending machine 8 and/or a node of the blockchain may be arranged to output this feature and/or an achievement associated with this feature. In practice, the blockchain being arranged to record a feature typically comprises the nodes of the blockchain being arranged to determine the feature and to record the feature on the blockchain. This may comprise a validating node and/or a proposing node of the blockchain being arranged to evaluate the blockchain and to evaluate a new transaction in order to identify a feature, where this feature is then recorded on the blockchain. In practice, the reverse vending machine 8 may be arranged to evaluate the blockchain and to evaluate a deposit in order to identify a feature/an achievement. Exemplary features include:
- A cumulative deposit threshold being reached. For example, a node of the blockchain may identify when a party has deposited at least 10 kilograms of material and may then record a corresponding achievement on the blockchain (e.g. the party may be recorded on the blockchain as a 'level 1 depositor').
- The depositing of a group of materials. For example, a node of the blockchain may identify when a party has deposited a certain amount of glass, a certain amount of plastic, and a certain amount of cardboard and may then record a corresponding achievement on the blockchain.
- The depositing of material over a certain period. For example, a node of the blockchain may identify when a party has deposited material at least once a week for the past month.
- A usage of a reward. For example, a node of the blockchain may identify when a party has transferred a certain amount of reward to a charity.

The recording of achievements enables the gamification of deposits. This can be used to encourage users to deposit certain materials and/or certain amounts of materials. Achievements and/or the requirements for achievements may be set by an owner of a machine and/or by an entity controlling the blockchain. These requirements may then be shown to users via the user interface of a computer device (e.g. the reverse vending machine 8 and/or a user's PC). This enables the depositing of certain materials to be incentivised.

Typically, achievements are associated with a reward so that users receive an award when they receive an achievement. This reward may be an amount of token, may be an ability to access a good or service, and/or may be the achievement being recorded on the blockchain (where this is associated with an amount of prestige).

Typically, the number of tokens in circulation for the blockchain is arranged to be dependent on an amount of material in the system. In particular, the blockchain may be configured so that upon initialisation the value of a token is dependent on an amount of extant material. For example, the number and value of tokens may be initialised in dependence on an amount of existing plastic. Therefore, the blockchain can be considered to be backed by plastic. The reward provided to depositors may be defined at the configuration of the blockchain (so that as the usage of the token increases and the value of the token rises, the incentive to recycle material increases). Beneficially, the use of the blockchain - and in particular the purchasing of tokens by companies intending to advertise their green credentials - will increase the value of the tokens so that recyclers are better able to profit from their activities. Furthermore, the use of a limited supply of tokens encourages early entry and use of the system due to the expectation that the value of tokens will rise as more parties decide to use the system.

A benefit of the system is that a user is able to simply track the flow of a piece of material through the system. For example, a bottle may be deposited into the reverse vending machine 8, taken out and processed by the recycler 6, and the resulting processed material then used to create a garment. Since each step of this process is automatically recorded on the blockchain, the blockchain can be used to track the processing of the material of the bottle. A buyer of the garment is then able to review the recycling process and to ensure that their garment is made from recycled material from a reputable recycler.

To enable the tracking of material through the blockchain, the blockchain (and the permissioned devices that are able to record information on the blockchain) is typically arranged so that transactions associated with an item of material are linked. For example, a transaction that relates to the extrusion of plastic may reference a prior transaction on the blockchain that relates to the deposit of this plastic in the reverse vending machine 8.

The blockchain may be arranged to record both transaction associated with the transfer of an asset and transactions not associated with the transfer of an asset (so that depositors are rewarded for deposits but then the tracking of processes does not require an asset transfer). Equally, the tracking of processes may involve the transfer of small or negligible amounts of assets, or might involve the transfer of assets to an entity that will return these assets, where this might simplify the implementation of the blockchain.

Eventually, the buyer may choose to recycle the garment. The garment can then be placed in the reverse vending machine 8 and recycled. This creates a closed environment in which materials can be continuously used and then recycled, with the processes being continuously tracked.

### Alternatives and modifications

Various other modifications will be apparent to those skilled in the art.

It will be understood that the present invention has been described above purely by way of example, and modifications of detail can be made within the scope of the invention.

Reference numerals appearing in the claims are by way of illustration only and shall have no limiting effect on the scope of the claims.

## Claims

1. An apparatus for recording a transaction on a blockchain, the apparatus comprising:
a receptacle for receiving a recyclable material from a depositor;
a sensor for determining a property of the material; and
a communication interface for recording a transaction on a blockchain, the transaction being dependent on the property of the material.

2. The apparatus of any preceding claim, wherein the property comprises one or more of: an amount of material; a weight of material; a type of material; a value of material; a brand of material; and a creator and/or seller of the material.

3. The apparatus of any preceding claim, wherein the apparatus is associated with an account on the blockchain and/or wherein the apparatus is arranged to record the transaction in dependence on a blockchain account associated with the apparatus.

4. The apparatus of any preceding claim, wherein the transaction is associated with the transfer of a token on the blockchain, preferably wherein recording the transaction comprises recording the transfer of the token to a party selected by the depositor and/or comprises recording the transfer of the token to the depositor.

5. The apparatus of any preceding claim, comprising a user interface for receiving a parameter of the depositor.

6. The apparatus of any preceding claim, wherein the transaction is dependent on a parameter of the depositor and/or on the previous activity of the depositor, preferably wherein the transaction is dependent on a cumulative amount of material deposited by the depositor.

7. The apparatus of any preceding claim, wherein the blockchain is configured so that an eligibility of the depositor to participate in the addition of blocks to the blockchain is dependent on a deposit of the depositor.

8. The apparatus of any preceding claim, comprising a removal receptacle for removing material from the apparatus, preferably wherein:
the removal receptacle is arranged so that material is removable in dependence on the transfer of an asset to the apparatus, more preferably wherein the removal receptacle is arranged so that material is removable in dependence on the transfer of a token associated with the blockchain, yet more preferably in dependence on the transfer of a token to an address and/or an account associated with the apparatus; and/or
the communication interface is arranged to record a detail of the removal on the blockchain, preferably to record a weight and/or value of removed material.

9. The apparatus of any preceding claim, comprising a user interface for displaying audio and/or video, preferably wherein the user interface is arranged to display audio and/or video in dependence on the transfer of an asset, more preferably in dependence on the transfer of a blockchain token to an address and/or an account associated with the apparatus.

10. The apparatus of any preceding claim, wherein the blockchain is arranged to record properties of the material, and/or processes associated with the material, following the removal of the material from the machine, preferably wherein the blockchain is arranged to record the arrival of the material at a processing facility.

11. The apparatus of any preceding claim, wherein a processor of the apparatus is arranged to determine an achievement associated with the depositor, preferably:
wherein the communication interface is arranged to record the achievement on the blockchain and/or
wherein the achievement is associated with one or more of: the depositor reaching a cumulative deposit threshold; the depositor having deposited a group of different materials; the depositor having deposited material regularly and/or for a certain period of time; and the depositor having used a reward in a specified way.

12. The apparatus of any preceding claim, wherein the transaction comprises an identifier arranged to be referred to by a later transaction, wherein the later transaction is associated with to a property of the material determined following processing of the material, more preferably wherein a/the reward for the depositor is dependent on the later transaction.

13. A system comprising a plurality of apparatuses according to any preceding claim, preferably wherein each apparatus is associated with a different account on the blockchain.

14. A computer-implemented method of recording a transaction on a blockchain, the method comprising:
receiving a recyclable material from a depositor;
determining a property of the material; and
recording a transaction on a blockchain, the transaction being dependent on the property of the material.

15. A blockchain comprising a transaction, wherein the transaction:
references a recyclable material received from a depositor;
wherein the transaction is dependent on a property of the material.
